# EUROPÄISCHE PATENTSCHRIFT

(11) **EP 2 875 584 B1**
(45) Veröffentlichungstag und Bekanntmachung des Hinweises auf die Patenterteilung: **01.06.2016**
(21) Anmeldenummer: 13736481.6
(22) Anmeldetag: 26.06.2013
(51) Int. Cl.: H04B 1/00

(54) **MOBILFUNKVORRICHTUNG FÜR EINEN KRAFTWAGEN, SOWIE VERFAHREN ZUM BETREIBEN DER MOBILFUNKVORRICHTUNG**
MOBILE WIRELESS DEVICE FOR A MOTOR VEHICLE, AND METHOD FOR OPERATING THE MOBILE WIRELESS DEVICE
DISPOSITIF DE TÉLÉCOMMUNICATION MOBILE POUR UN VÉHICULE AUTOMOBILE, AINSI QUE PROCÉDÉ POUR LE FONCTIONNEMENT DU DISPOSITIF DE TÉLÉCOMMUNICATION MOBILE

(30) Priorität: 21.07.2012 DE 102012014548
(43) Veröffentlichungstag der Anmeldung: 27.05.2015
(60) Teilanmeldung: 16000773.8
(73) Patentinhaber: Audi AG, 85045 Ingolstadt (DE)
(72) Erfinder: EHRENTRAUT, Herbert, 92339 Beilngries (DE)
(74) Vertreter: Brandt, Kai
(86) Internationale Anmeldenummer: PCT/EP2013/001874
(87) Internationale Veröffentlichungsnummer: WO 2014/015933

(56) Entgegenhaltungen:
- EP-A2- 2 134 000
- US-A1- 2007 142 001

## Beschreibung

Die Erfindung betrifft eine Mobilfunkvorrichtung für einen Kraftwagen, die zwei Mobilfunkmodule aufweist, mittels welchen ein Mobilfunksignal mit einer externen Mobilfunkstation ausgetauscht werden kann. Die Erfindung betrifft auch einen Kraftwagen mit einer solchen Mobilfunkvorrichtung sowie ein Verfahren zum Betreiben der Mobilfunkvorrichtung. Mit einem Kraftwagen wird vorliegend insbesondere ein Personenkraftwagen und ein Lastkraftwagen verstanden.

Bei einem solchen Kraftwagen kann durch Mobilfunkmodul ermöglicht sein, von einem Telefon des Kraftwagens aus Telefonate über das Mobilfunknetzwerk eines Mobilfunkbetreibers zu führen. Ein solches Mobilfunkmodul umfasst in der Regel einen oder mehrere integrierte Schaltkreise (Computerchip), die aus den zu versendenden digitalen Daten ein Mobilfunksignal erzeugen, das über einen Signalanschluss an eine Antenne ausgegeben werden kann, um von dort zu einer Mobilfunkstation gesendet zu werden. Umgekehrt kann ein von einer solchen Mobilfunkstation empfangenes Mobilfunksignal durch das Mobilfunkmodul verarbeitet werden, um so die im Mobilfunksignal enthaltenen Sprachdaten zu extrahieren. Neben der Telefonie ist über eine solche Mobilfunkanbindung auch die Übertragung von digitalen Nutzdaten anderer Art möglich, insbesondere Netzwerkdaten für einen Datenaustausch mit dem Internet, also beispielsweise E-Mails oder Browserdaten.

Mit der fortschreitenden Entwicklung der Mobilfunktechnologie muss in einem Kraftwagen sichergestellt sein, dass die darin verbaute Mobilfunkvorrichtung auch mit den Mobilfunkstationen unterschiedlicher Mobilfunkstandards kommunizieren kann. Hierzu ist beispielsweise bekannt, in einer Mobilfunkvorrichtung ein Mobilfunkmodul bereitzustellen, für eine Übertragung gemäß dem GSM-Standard (global system for mobile communications) oder für Signalübertragung gemäß dem UMTS-Standard (UMTS - universal mobile telecommunication system) ausgelegt ist. Eine Datenübertragung zwischen den Kraftwagen und einem Mobilfunknetzwerk findet dann jeweils über dasjenige Mobilfunkmodul statt, zu welchem eine passende Mobilfunkstation in der Umgebung des Kraftwagens verfügbar ist.

Im Zusammenhang mit einem Mehrwegeempfang von Mobilfunksignalen ist bekannt, in einem Kraftwagen zwei oder mehr Antennen bereitzustellen.

Bei der Entwicklung eines Kraftwagens muss im Zusammenhang mit der Bereitstellung von Mobilfunkvorrichtungen für neue Telekommunikationsstandards beachtet werden, dass solche neuen Standards in den ersten Jahren nach der Einführung nicht immer zuverlässig funktionieren. Beispielsweise wird bei dem neuen LTE-Standard (LTE - long term evolution) die vorgesehene Übertragungsart für Telefonie VoLTE noch nicht von den Mobilfunknetzen unterstützt. Statt dessen muss auf einen älteren Standard beispielsweise UMTS oder GSM zurückgeschaltet werden. Die Implementierung von LTE im Fahrzeug wird deshalb erfahrungsgemäß mit technischen Schwierigkeiten verbunden sein, so dass es wünschenswert ist, eine redundante Fallback-Lösung zu haben.

Aus dem Dokument US 2007/0142001 A1 ist eine Kommunikationseinrichtung bekannt, bei welcher ein UMTS-Funkmodul und ein GSM-Funkmodul über zwei Schalter mit zwei Antennen verbunden sind. Hierbei ist jeweils eines der Mobilfunkmodule mit einer der Antennen zugleich verbunden. Durch die Schalter können die Antennen getauscht werden.

Aus der EP 2 134 000 A2 ist eine Kommunkationseinrichtung bekannt, bei welcher ein GSM-Funkmodul und ein WCDMA-Funkmodul über einen Schalter mit einer ersten Antenne gekoppelt sind. Durch den Schalter kann festgelegt werden, welches der beiden Mobilfunkmodule zur Zeit mit der ersten Antenne verbunden ist. Das WCDMA-Mobilfunkmodul ist des Weiteren mit einer zweiten Antenne dauerhaft verbunden, über die ein Funksignal in einem separaten Mobilfunkband ausgesendet und/oder empfangen werden kann.

Aufgabe der Erfindung ist es, eine mit geringem schaltungstechnischem Aufwand realisierbare robuste Sprachtelefonie für einen Kraftwagen bereitzustellen.

Die Aufgabe wird durch die Gegenstände der unabhängigen Patentansprüche gelöst. Vorteilhafte Weiterbildungen der Erfindung sind durch die Unteransprüche gegeben.

Die erfindungsgemäße Mobilfunkvorrichtung weist zwei Mobilfunkmodule zum Austauschen eines Mobilfunksignals mit einer externen Mobilfunkstation auf. Das erste Mobilfunkmodul ist dabei dazu ausgelegt, das Mobilfunksignal gemäß zumindest einem ersten Mobilfunkstandard auszutauschen, das zweite Mobilfunkmodul tauscht sein Mobilfunksignal gemäß einem zweiten Mobilfunkstandard mit einer Mobilfunkstation aus. Für die Erfindung ist es dabei nicht wichtig, ob beide Mobilfunkmodule mit derselben Mobilfunkstation oder mit unterschiedlichen Mobilfunkstationen kommunizieren. Für den Empfang bzw. das Versenden des Mobilfunksignals weist jedes Mobilfunkmodul einen entsprechenden Signalanschluss auf. Das erste Modul kann zumindest einen der Standards LTS, UMTS und GSM, das zweite z. B. nur GSM aufweisen. Die erfindungsgemäße Mobilfunkvorrichtung weist des Weiteren eine erste und eine zweite Antenne zum Übertragen der Mobilfunksignale auf. Die beiden Mobilfunkmodule teilen sich dabei die zwei Antennen. Hierzu ist eine Schalteinrichtung bereitgestellt, die mit den Antennen und dem jeweiligen Signalanschluss der Mobilfunkmodule verbunden ist. Die Schalteinrichtung ist dazu ausgelegt, in Abhängigkeit von einem Schaltsignal zwischen einem ersten Schaltzustand und einem zweiten Schaltzustand umzuschalten. Der erste Schaltzustand ist hierbei dadurch definiert, dass der Signalanschluss des ersten Mobilfunkmoduls (im Folgenden erster Signalanschluss genannt) mit der ersten Antenne und der Signalanschluss des zweiten Mobilfunkmoduls (im Folgenden zweiter Signalanschluss genannt) mit der zweiten Antenne gekoppeit ist. Entsprechend umgekehrt ist der zweite Schaltzustand der Schalteinrichtung dadurch definiert, dass der erste Signalanschluss mit der zweiten Antenne und der zweite Signalanschluss mit der ersten Antenne gekoppelt ist.

Die Erfindung weist den Vorteil auf, dass mit einem Antennensystem aus zwei oder mehr Antennen für Antennendiversität zwei unterschiedliche Mobilfunkmodule zugleich betrieben werden können, ohne dass es hierbei zu einem für den Benutzer der Mobilfunkvorrichtung in einem Kraftwagen relevanten Bandreduktion der Übertragungsbandbreite kommt. Bei der für die Antennendiversität bereitgestellten ersten und zweiten Antenne ist in der Regel davon auszugehen, dass eine davon, im Folgenden sei davon ausgegangen, dass es sich um die erste Antenne handelt, eine für einen störungsfreien Signalaustausch günstigere Position im Kraftwagen aufweist, während die zweite Antenne als Hilfsantenne für die Antennendiversität darstellt. Für den Fall, dass nur das erste Mobilfunkmodul ein Mobilfunksignal überträgt und hierbei beide Antennen für die Antennendiversitäten nutzt, kann mittels der Schalteinrichtung das zweite Mobilfunkmodul auf die zweite Antenne, d.h. die Hilfsantenne, geschaltet sein, so dass über die zweite Antenne von dem zweiten Mobilfunkmodul immer noch Kontrolldaten von einer Mobilfunkstation empfangen werden können. Sobald auch das zweite Mobilfunkmodul für die Übertragung eines Mobilfunksignals genutzt werden soll, kann mittels der Schalteinrichtung das zweite Mobilfunkmodul auf die erste Antenne, also die Hauptantenne mit den besseren Sendeeigenschaften, geschaltet werden. Für diesen Zeitraum kann das erste Mobilfunkmodul mit der zweiten Antenne verbunden werden und weiter die Signalübertragung mittels der zweiten Antenne durchführen.

Der erfindungsgemäße Kraftwagen zeichnet sich dadurch aus, dass er eine Ausführungsform der erfindungsgemäßen Mobilfunkvorrichtung aufweist. Bei dem erfindungsgemäßen Kraftwagen ist es insbesondere nicht nötig, dass die beiden Antennen in gleichem Maße für eine störungsfreie Übertragung eines Mobilfunksignals geeignet sein müssen. Entsprechend sieht eine Ausführungsform des erfindungsgemäßen Kraftwagens vor, dass die erste Antenne einen kleineren Richtfaktor aufweist als die zweite Antenne. Der kleinere Richtfaktor besagt, dass die erste Antenne durch die übrigen Bauteile des Kraftwagens weniger stark zur Umgebung hin abgeschirmt ist, als die zweite Antenne. Mittels der ersten Antenne ist es also einfacher, ein Mobilfunksignal mit einer Mobilfunkstation in einer beliebigen Richtung in der Umgebung des Kraftwagens auszutauschen. Die Ausführungsform weist den Vorteil auf, dass die zweite Antenne an einem weniger exponierten Ort des Kraftwagens, beispielsweise in einer Stoßstange, angeordnet sein kann. In Bezug auf die erste Antenne ist diese bevorzugt auf einem Dach des Kraftwagens angeordnet. Hierdurch ist es möglich, mittels der ersten Antenne in einer horizontalen Ebene rund um den Kraftwagen eine Sichtverbindung mit Mobilfunkstationen zu erhalten.

Um für die beiden Mobilfunkmodule je nach Situation möglichst günstige Sende- und/oder Empfangsbedingungen zu schaffen, sieht das erfindungsgemäße Verfahren vor, während einer Übertragung eines Sprachtelefoniesignals die Umschalteinrichtung im zweiten Schaltzustand zu halten und ansonsten die Umschalteinrichtung im ersten Schaltzustand zu halten. Mit anderen Worten ist während der Übertragung eines Sprachtelefoniesignals das zweite Mobilfunkmodul mit der ersten Antenne gekoppelt, von der hier ausgegangen wird, dass es sich um die Antenne mit den günstigeren Sende- und/oder Empfangseigenschaften handelt. Das erste Mobilfunkmodul ist während dessen mit der zweiten, schwächeren Antenne gekoppelt. Sobald das Telefonat beendet ist, also keine Sprachtelefoniesignale mehr übertragen werden, wird die Umschalteinrichtung wieder in den ersten Schaltzustand gebracht, so dass das erste Mobilfunkmodul wieder über die erste Antenne sendet bzw. empfängt. Das erfindungsgemäße Verfahren weist den Vorteil auf, dass einem Nutzer während eines Telefonats stets die beste mögliche Signalverbindung während eines Telefonats mittels des zweiten Mobilfunkmoduls bereitgestellt wird. Nutzt der Benutzer dagegen das erste Mobilfunkmodul, um beispielsweise im Internet Informationen zu suchen, wird während dessen ebenfalls in der Regel die erste Antenne genutzt. In diesem Zusammenhang hat sich herausgestellt, dass eine Verzögerung der Datenübertragung für den Fall, dass der Benutzer während des Herunterladens von Informationen aus dem Internet telefoniert, vom Benutzer kaum wahrgenommen wird. Daher ist es unproblematisch, wenn während eines Telefonats das erste Mobilfunkmodul lediglich über die zweite Antenne Mobilfunksignale austauschen kann.

In Bezug auf die Steuerung der Schalteinrichtung sieht eine Weiterbildung der erfindungsgemäßen Mobilfunkvorrichtung eine Umschalteinrichtung vor, die dazu ausgelegt ist, durch Erzeugen eines vorbestimmten Schaltsignals die Schalteinrichtung zu Beginn einer Sprachübertragung in den zweiten Schaltzustand zu schalten. Hierdurch ergibt sich der Vorteil, dass das zweite Mobilfunkmodul nur bei Bedarf die erste Antenne nutzt und ansonsten Kontrolldaten und dergleichen über die zweite Antenne mit Mobilfunkstationen austaucht. Zweckmäßigerweise ist die Umschalteinrichtung als Bestandteil des zweiten Mobilfunkmoduls bereitgestellt. In diesem Fall ist ein Steuerausgang des zweiten Mobilfunkmoduls zum Ausgeben des beschriebenen Steuersignals mit einem Steuereingang der Schalteinrichtung gekoppelt. Hierdurch ergibt sich der Vorteil, dass das zweite Mobilfunkmodul immer dann selbständig die Schalteinrichtung von dem ersten in den zweiten Schaltzustand umschalten kann, wenn im zweiten Mobilfunkmodul der Bedarf für eine Signalübertragung über die erste Antenne erkannt wird.

In diesem Zusammenhang sieht eine Weiterbildung des erfindungsgemäßen Verfahrens vor, dass bei einem Anruf von außerhalb des Kraftwagens die Schalteinrichtung vom ersten in den zweiten Schaltzustand durch Erzeugen eines vorbestimmten Schaltsignals umgeschaltet wird. Hierdurch ergibt sich der Vorteil, dass eintreffende Telefonanrufe über die erste Antenne empfangen werden.

Eine andere Weiterbildung des erfindungsgemäßen Verfahrens sieht vor, dass bei einem Rufaufbau eine Sprachverbindung durch das zweite Mobilfunkmodul die Schalteinrichtung ebenfalls vom ersten in den zweiten Schaltzustand durch Erzeugen eines vorbestimmten Schaltsignals umgeschaltet wird. Hierdurch ergibt sich der Vorteil, dass auch vom Fahrzeug ausgehende Sprachverbindungen über die erste Antenne versendet werden.

Um die beiden Antennen im Rahmen einer Antennendiversität für das erste Mobilfunkmodul nutzbar zu machen, sieht eine Weiterbildung der Mobilvorrichtung vor, dass das erste Mobilfunkmodul einen weiteren Signalanschluss aufweist, der permanent mit der zweiten Antenne verbunden ist, also durchgehend und unabhängig vom Schaltzustand der Schalteinrichtung.

Zweckmäßigerweise ist hierbei die zweite Antenne über einen Splitter mit der Schalteinrichtung einerseits und dem weiteren Signalanschluss andererseits verbunden. Hierdurch ergibt sich der Vorteil, dass bei der gleichzeitigen Nutzung beider Antennen durch das erste Mobilfunkmodul sich nur ein verhältnismäßig geringer Leistungsverlust des ersten Mobilfunksignals ergibt. Mit anderen Worten lässt sich mittels des ersten Mobilfunkmoduls und der Antennendiversität nahezu dieseibe Übertragungsquaiität bei der erfindungsgemäßen Mobilfunkvorrichtung bereitstellen, wie bei einer herkömmlichen Mobilfunkvorrichtung, die nur ein einzelnes Mobilfunkmodul und zugeordnete Antennen aufweist.

Es wird insbesondere vorgesehen, mittels des ersten Mobilfunkmoduls eine Signalübertragung gemäß einem moderneren Mobilfunkstandard zu ermöglichen als mit dem zweiten Mobilfunkmodul. Entsprechend einer Weiterbildung der erfindungsgemäßen Mobilfunkvorrichtung ist daher das erste Mobilfunkmodul dazu ausgelegt, von Sprachdaten verschiedene digitale Nutzerdaten mittels des ersten Mobilfunksignals auszutauschen, also die Daten betreffend eine Videoübertragung, E-Mails, Internetdaten betreffend Internetseiten und dergleichen. Das zweite Mobilfunkmodul ist dagegen bevorzugt dazu ausgelegt, als das zweite Mobilfunksignal ein Sprachtelefoniesignal auszutauschen. Hierdurch ergibt sich der Vorteil, mittels des ersten Mobilfunkmoduls eine modernere breitbandige Anbindung von Datenverarbeitungsgeräten an ein Datennetzwerk, insbesondere das Internet, bereitzustellen. Rechtzeitig kann mittels des zweiten Mobilfunkmoduls eine robuste, ältere Technologie für die störungsfreie Sprachübertragung bereitgestellt sein. Insbesondere ist bei dem erfindungsgemäßen Mobilfunkmodul vorgesehen, dass das erste Mobilfunkmodul das Mobilfunksignal gemäß zumindest einem aus den folgenden Mobilfunkstandards austauscht: LTE, UMTS, HSPA (high speed packet access). Entsprechend ist gemäß einer Weiterbildung der Mobilfunkvorrichtung vorgesehen, dass das zweite Mobilfunkmodul ein GSM-Modul ist.

Das erfindungsgemäße Verfahren sieht des weiteren vor, dass die Dämpfung des Antennensignals für das zweite Mobilfunkmodul durch schaltungstechnische Maßnahmen minimiert ist. Im Falle einer Sprachverbindung wird die erste Antenne mit nur einem Umschalter auf das zweite Mobilfunkmodul geschaltet.

Im Falle eines Betriebs im GSM Funknetz kann ein Sendeimpuls des zweiten Empfangsmoduls die Empfangseigenschaften des ersten Mobilfunkmoduls verschlechtern. Das erfindungsgemäße Verfahren sieht des weiteren vor, dass vom zweiten Mobilfunkmodul ein Signal vor einem Sendeimpuls generiert wird. Dieses Signal kann dazu verwendet werden, im Falle eines Sendeimpulses des zweiten Moduls für das erste Modul Schutzmechanismen zu ergreifen. Beispielsweise kann im Falle eines Sendeimpulses das Antennensignal kurzzeitig vom ersten Modul getrennt werden.

In Bezug auf die schaltungstechnische Realisierung der erfindungsgemäßen Mobilfunkvorrichtung umfasst diese bevorzugt eine Einsteckkarte, auf welcher beide Mobilfunkmodule angeordnet sind. Hierdurch ergibt sich der Vorteil, dass das erfindungsgemäße Mobilfunkmodul in einen Steckplatz eingesteckt werden kann, der für eine herkömmliche Mobilfunkvorrichtung mit nur einem Mobilfunkmodul vorgesehen ist. Hierdurch ist es nicht nötig, bei einer Neuentwicklung eines Kraftwagens auch weitere schaltungstechnische Maßnahmen für die Nutzung beider Mobilfunkmodule des erfindungsgemäßen Mobilfunkmoduls vorzusehen. Sämtliche schaltungstechnisch benötigten Elemente können auf der einen Einsteckkarte bereitgestellt sein.

Im Folgenden wird die Erfindung noch einmal genau anhand eines konkreten Ausführungsbeispiels erläutert. Dazu zeigt:
- Fig. 1: eine schematische Darstellung einer bevorzugten Ausführungsform des erfindungsgemäßen Kraftwagens und
- Fig. 2: einen schematischen Aufbau einer Ausführungsform der erfindungsgemäßen Mobilfunkvorrichtung wie sie in dem Kraftwagen von Fig. 1 eingebaut sein kann.

Bei dem im Folgenden erläuterten Beispiel stellen die beschriebenen Komponenten des Kraftwagens und der Mobilfunkvorrichtung jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

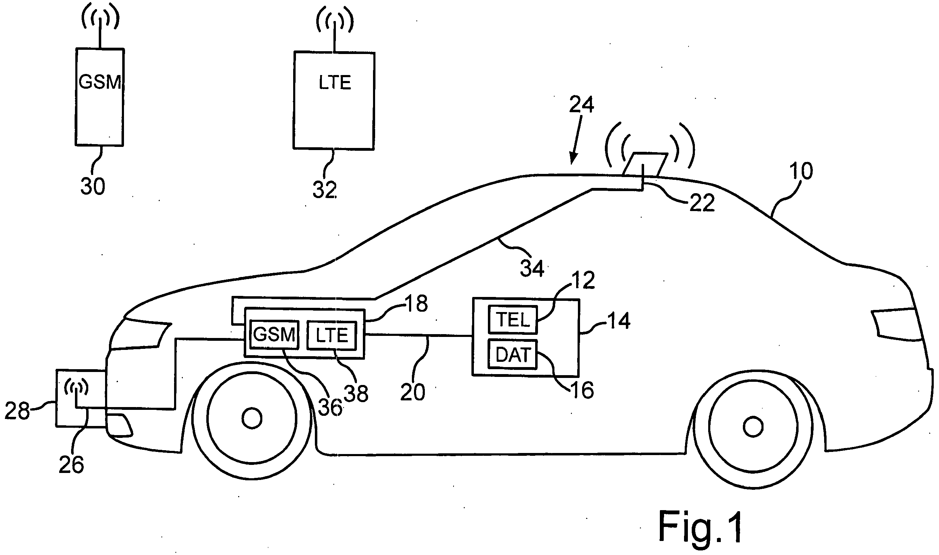

In Fig. 1 ist ein Kraftwagen 10 gezeigt, bei dem es sich beispielsweise um einen Personenkraftwagen handeln kann. In dem Kraftwagen 10 befindet sich ein Telefon 12. Das Telefon 12 kann fest in dem Kraftwagen 10 installiert sein. In dem Kraftwagen 10 kann sich des Weiteren ein Computer 16 befinden, der beispielsweise Bestandteil des Infotainmentsystems 14 sein kann und es einem Benutzer des Kraftwagens 10 ermöglicht, Daten mit dem Internet auszutauschen. Für den Austausch von Telefoniedaten bzw. den von den Sprachdaten verschiedenen Nutzerdaten für den Computer 16 und weiteren, nicht dargestellten Datenverarbeitungseinrichtungen, weist der Kraftwagen 10 eine Mobilfunkeinheit 18 auf. Die Mobilfunkeinheit 18 kann beispielsweise über einen digitalen Kommunikationsbus 20 mit dem Infotainmentsystem 14 verbunden sein. Mittels der Mobilfunkeinheit 18 können die Telefoniedaten und die übrigen Nutzerdaten in ein (nicht dargestelltes) Mobilfunknetzwerk übertragen werden, von wo sie dann im Falle von Telefoniedaten zu einem anderen Endgerät und im Falle von Nutzerdaten z.B. in das Internet übertragen werden können. Die Mobilfunkeinheit 18 weist zum Aussenden und Empfangen der Mobilfunksignale zwei Antennen auf, von denen eine Hauptantenne 22 auf einem Dach 24 des Kraftwagens 10 und eine sekundäre Antenne 26 beispielsweise in einem Stoßdämpfer 28 des Kraftwagens 10 angeordnet sein kann. Die Hauptantenne 22 weist eine geringere Direktivität als die in horizontaler Richtung zum Teil vom Blech des Kraftwagens 10 abgeschirmte sekundäre Antenne 26 auf. Über die Antenne 22, 26 tauscht die Mobilfunkeinheit 18 Mobilfunksignale mit Mobilfunkstationen 30, 32 aus, die wiederum mit den erwähnten Mobilfunknetzwerken verbunden sind. Bei der Mobilfunkstation 30 kann es sich beispielsweise um eine GSM-Mobilfunkstation handeln, bei der Mobilfunkstation 32 um eine UMTS- oder eine LTE-Mobilfunkstation. Die geringere Direktivität der Hauptantenne 22 besagt, dass es wahrscheinlicher ist, mit der Hauptantenne 22 eine ungestörte Funkverbindung zu umliegenden Mobilfunkstationen aufzubauen als mit der teilweise abgeschirmten sekundären Antenne 26. Indem nur die Hauptantenne 22 auf dem Dach 24 befestigt ist, muss nur ein Verbindungskabel 34 im Kraftwagen 10 von der Mobilfunkeinheit 18 zum Dach 24 verlegt sein.

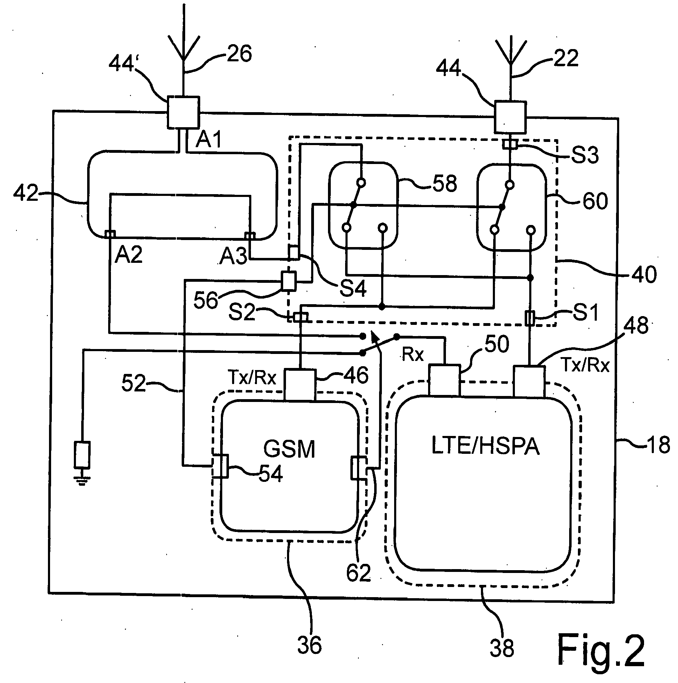

Die Mobilfunkeinheit 18 ist in der Lage, mit beiden Mobilfunkstationen 30, 32 gemäß dem jeweiligen Mobilfunkstandards (hier in diesem Beispiels also GSM und LTE) Daten auszutauschen. Die Mobileinheit 18 weist hierzu ein GSM-Mobilfunkmodul 36 und ein LTE-Mobilfunkmodul oder kombiniertes LTE/UMTS/GSM-Mobilfunkmodul 38 auf. Der Aufbau der Mobilfunkeinheit 18 ist im Folgenden anhand von Fig. 2 noch einmal genauer erläutert.

Bei dem Mobilfunkmodul 36 und dem Mobilfunkmodul 38 kann es sich jeweils beispielsweise um einen ASIC (application specific integrated circuit), ein FPGA (field programmable gate array), ein DSP (digitaler Signalprozessor) oder eine CPU (general purpose processing unit) handeln. Mobilfunkmodule wie das Mobilfunkmodul 36 und das Mobilfunkmodul 38 sind an sich aus dem Stand der Technik bekannt. Die Mobilfunkeinheit 18 umfasst des Weiteren eine Schalteinrichtung 40 und einen Splitter 42. Die Hauptantenne 22 ist über einen Hauptantennenanschluss 44 an die Mobilfunkeinheit 18 angeschlossen. Die sekundäre Antenne 26 ist über einen sekundären Antennenanschluss 46 an die Mobilfunkeinheit 18 angeschlossen.

Das Mobilfunkmodul 38 ist über einen Signalanschluss 48 zum Senden und Empfangen eines Mobilfunksignals mit der Schalteinrichtung 40 verbunden. Bei der Schalteinrichtung 40 kann es sich beispielsweise um eine integrierte Schaltung handeln. Ein Signalanschluss 50 des Mobilfunkmoduls 36 ist ebenfalls mit einem Anschluss S2 der Schalteinrichtung 40 verbunden. Der Hauptantennenanschluss 44 ist mit einem Anschluss S3 der Schalteinrichtung 40 verbunden, ein Anschluss A3 des Splitters 42 mit einem Anschluss S4 der Schalteinrichtung 40. Ein Anschluss A2 des Splitters 42 ist mit einem weiteren Signalanschluss 50 des Mobilfunkmoduls 38 verbunden. Zwischen dem Anschluss A2 und dem Anschluss A3 des Splitters 42 kann der Splitter 42 eine Dämpfung von z.B. 20 dB aufweisen. Ein Anschluss A1 des Splitters 20 ist mit dem sekundären Antennenanschluss 46 verbunden. Eine Steuerleitung 52 verbindet einen Steuerausgang 54 des Mobilfunkmoduls 36 mit einem Steuereingang 56 der Schalteinrichtung 40. Durch Erzeugen eines Schaltsignals am Schaltausgang 54 kann das Mobilfunkmodul 36 hierdurch zwei Schalter 58, 60 der Schalteinrichtung 40 umschalten. In einem ersten Schaltzustand ist der Anschluss S1 über den Schalter 60 mit dem Anschluss S3 verbunden und der Anschluss S2 über den Schalter 58 mit dem Anschluss S4. Entsprechend ist im ersten Schaltzustand der Signalanschluss 48 des Mobilfunkmoduls 38 über die Schalteinrichtung 40 mit der Hauptantenne 22 und der Signalanschluss 46 mit der sekundären Antenne 26 gekoppelt. In Fig. 2 ist die Schalteinrichtung 40 in einem zweiten Schaltzustand gezeigt, in welchem der Anschluss S2 über den Schalter 60 mit dem Anschluss S3 und der Anschluss S1 über den Schalter 58 mit dem Anschluss S4 verbunden ist. Damit ist das Mobilfunkmodul 38 über seinen Signalanschluss 48 mit der sekundären Antenne 26 und das Mobilfunkmodul 36 über seinen Signalanschluss 46 mit der Hauptantenne 22 verbunden. Über den Splitter 42 ist der weitere Signalanschluss 50 des Mobilfunkmoduls 38 permanent mit der sekundären Antenne 26 verbunden. Das Mobilfunkmodul 38 ist dazu ausgelegt, über die beiden Signalanschlüsse 48, 50 einen Empfang auf Grundlage einer mittels der Antennen 22, 26 gebildeten Antennendiversität zu ermöglichen. Hierzu muss die Schalteinrichtung 40 im ersten Schaltzustand geschaltet sein.

Des weiteren kann vom zweiten Mobilfunkmodul ein Signal 62 zum Anzeigen eines Sendeimpuls des zweiten Moduls generiert werden. Mit diesem Signal können Schutzmaßnahmen für den Signalanschluss 50 des ersten Mobilfunkmoduls ergriffen werden. In Fig 2 ist das beispielsweise die kurzzeitige Unterbrechung des Antennensignals zum Signalanschluß 50.

Bei dem Kraftwagen 10 werden Telefongespräche mittels des Telefons 12 über das Mobilfunkmodul 36, d.h. das GSM-Mobilfunkmodul übertragen. Die übrigen Nutzdaten werden über das LTE-Mobilfunkmodul 38 übertragen. Durch den Aufbau der Mobilfunkeinheit 18 teilen sich beide Mobilfunkmodule 36, 38 die Antennen 22, 26. Wie bereits ausgeführt, weist die Hauptantenne 22 bessere Empfangseigenschaften als die Antenne 26 auf. Bei der Mobilfunkeinheit 18 wird bedarfsweise die Antenne mit den besseren Empfangseigenschaften, d.h. die Hauptantenne 22, dem LTE- oder dem GSM-Mobilfunkmodul zugeschaltet. Beispielsweise kann vorgesehen sein, während eines Telefonats die Hauptantenne 22 mit dem GSM-Modul, d.h. dem Mobilfunkmodul 36, zu verbinden. Hierzu wird die Schalteinrichtung 40 in den zweiten Schaltzustand geschaltet. In dem in Fig. 2 veranschaulichten Beispiel steuert das GSM-Modul die Umschaltlogik der Antennen, d.h. die Schalteinrichtung 14. Hierdurch wird sichergestellt, dass während eines Telefonats das GSM-Mobilfunkmodul die umlie genden Basisstationen, also etwa die Basisstation 30, per Funk mit einer möglichst geringen Abschirmung erreichen kann. Die Mobilfunkeinheit 18 ist bevorzugt als Einsteckkarte realisiert, die beispielsweise in einem dafür vorgesehenen Einsteckblatt des Infotainmentsystems 14 eingesteckt sein kann. Hierbei kann vorgesehen sein, dass die Steuerung des GSM-Mobilfunkmoduls 36 durch das Mobilfunkmodul 38 erfolgt. Hierdurch ergibt sich der Vorteil, dass die übrigen Komponenten des Infotainmentsystems 14 ausschließlich dazu ausgelegt sein müssen, mit dem Mobilfunkmodul 38 zu kommunizieren, d.h. die zu übertragenen Daten bzw. die empfangenen Daten auszutauschen. Eine Aufteilung der Daten zwischen dem Mobilfunkmodul 38 und dem Mobilfunkmodul 36 kann dann innerhalb der Mobilfunkeinheit 18 durch eine entsprechende Signalverarbeitung des Mobilfunkmoduls 38 erfolgen.

Das Umschalten der Schalteinrichtung 40 kann auch erfolgen, während das Mobilfunkmodul 38 bereits Nutzerdaten mit der Mobilfunkstation 32 austauscht. Mobilfunkstandards sind in der Regel derart ausgelegt, dass eine Veränderung der Übertragungscharakteristik der Funkstrecke nicht zu einem vollständigen Verbindungsabbruch führt. Wird also die Schalteinrichtung 40 vom ersten Schaltzustand (Antennendiversität) in den zweiten Schaltzustand geschaltet (Signalanschlüsse 48 und 50 sind beide mit der sekundären Antenne 26 gekoppelt), so erfolgt in der gewohnten Weise eine Anpassung des Übertragungsverhaltens des Mobilfunkmoduls 38 und es kann die Nutzdatenübertragung mit einer verringerten Übertragungsrate fortgesetzt werden. Die verringerte Datenübertragungsrate fällt dem Benutzer in der Regel nicht auf, da das Umschalten in den zweiten Schaltzustand nur erfolgt, wenn ein Telefongespräch eintrifft oder eine Telefonverbindung vom Telefon 12 aus aufgebaut wird. Mit anderen Worten findet das Umschalten nur statt, wenn der Benutzer des Kraftwagens 10 telefoniert, was während eines Telefongesprächs nicht auffällt.

## Patentansprüche

1. Mobilfunkvorrichtung für einen Kraftwagen (10), umfassend:
- ein erstes Mobilfunkmodul (38) zum Austauschen eines ersten Mobilfunksignals gemäß einem ersten Mobilfunkstandard oder mehrerer Mobilfunkstandards über einen ersten Signalanschluss (48) des ersten Mobilfunkmoduls (38) mit einer externen Mobilfunkstation (32),
- ein zweites Mobilfunkmodul (36) zum Austauschen eines zweiten Mobilfunksignals gemäß einem zweiten Mobilfunkstandard über einen zweiten Signalanschluss (46) des zweiten Mobilfunkmoduls (36) mit einer externen Mobilfunkstation (30),
- eine erste Antenne (22) und eine zweite Antenne (26) zum Übertragen der Mobilfunksignale, und
- eine Schalteinrichtung (40), die mit den Antennen (22, 26) und dem ersten und dem zweiten Signalanschluss (46, 48) verbunden ist und die dazu ausgelegt ist, in Abhängigkeit von einem Schaltsignal zwischen einem ersten Schaltzustand, in welchem der erste Signalanschluss (48) mit der ersten Antenne (22) und der zweite Signalanschluss (46) mit der zweiten Antenne (26) gekoppelt ist, und einem zweiten Schaltzustand, in welchem der erste Signalanschluss (48) mit der zweiten Antenne (26) und der zweite Signalanschluss (46) mit der ersten Antenne (22) gekoppelt ist, umzuschalten,
**gekennzeichnet durch**
eine Umschalteinrichtung (54), die dazu ausgelegt ist, **durch** Erzeugen eines vorbestimmten Schaltsignals die Schalteinrichtung (40) zu Beginn einer Sprachübertragung in den zweiten Schaltzustand zu schalten.

2. Mobilfunkvorrichtung nach Anspruch 1, **dadurch gekennzeichnet, dass** das erste Mobilfunkmodul (38) dazu ausgelegt ist, von Sprachdaten verschiedene digitale Nutzerdaten mittels des ersten Mobilfunksignals auszutauschen, und das zweite Mobilfunkmodul (36) dazu ausgelegt ist, als das zweite Mobilfunksignal ein Sprachtelefoniesignal auszutauschen.

3. Mobilfunkvorrichtung nach einem der vorhergehenden Ansprüche, **dadurch gekennzeichnet, dass** die Umschalteinrichtung im zweiten Mobilfunkmodul (36) bereitgestellt ist und ein Steuerausgang (54) des zweiten Mobilfunkmoduls (36) zum Ausgeben des Steuersignals mit einen Steuereingang (56) der Schalteinrichtung (40) gekoppelt ist.

4. Mobilfunkvorrichtung nach einem der vorhergehenden Ansprüche, **dadurch gekennzeichnet, dass** das zweite Mobilfunkmodul (36) ein GSM-Modul ist.

5. Mobilfunkvorrichtung nach Anspruch 4, die dazu ausgebildet ist, im Falle eines GSM-Sendeimpulses durch das zweite Modul Schutzmaßnahmen für das erste Mobilfunkmodul zu ergreifen.

6. Mobilfunkvorrichtung nach einem der vorhergehenden Ansprüche, **dadurch gekennzeichnet, dass** das erste Mobilfunkmodul (38) das erste Mobilfunksignal gemäß zumindest einem aus den folgenden Mobilfunkstandards auszutauschen ausgelegt ist: LTE, HSPA, UMTS.

7. Mobilfunkvorrichtung nach einem der vorhergehenden Ansprüche, **dadurch gekennzeichnet, dass** das erste Mobilfunkmodul (38) einen weiteren Signalanschluss (50) aufweist, der unabhängig vom Schaltzustand der Schalteinrichtung (40) durchgehend mit der zweiten Antenne (26) verbunden ist.

8. Mobilfunkvorrichtung nach Anspruch 7, **dadurch gekennzeichnet, dass** die zweite Antenne (26) über einen Splitter (42) mit der Schalteinrichtung (40) einerseits und dem weiteren Signalanschluss (50) andererseits verbunden ist.

9. Mobilfunkvorrichtung nach einem der vorhergehenden Ansprüche, **dadurch gekennzeichnet, dass** das erste und das zweite Mobilfunkmodul (36, 38) auf einer gemeinsamen Einsteckkarte angeordnet sind.

10. Mobilfunkvorrichtung nach einem der vorhergehenden Ansprüche, **gekennzeichnet durch** eine Umschalteinrichtung (54), die dazu ausgelegt ist, die Antennenverluste für das zweite Mobilfunkmodul **durch** die Verwendung nur eines einzelnen Schalters im Falle eines Telefongesprächs zu minimieren.

11. Kraftwagen (10) mit einer Mobilfunkvorrichtung gemäß einem der vorhergehenden Ansprüche.

12. Kraftwagen (10) nach Anspruch 11, **dadurch gekennzeichnet, dass** die erste Antenne (22) einen kleineren Richtfaktor aufweist als die zweite Antenne.

13. Verfahren zum Betreiben einer Mobilfunkvorrichtung gemäß einem der Ansprüche 1 bis 10, bei welchem während einer Übertragung eines Telefoniesignals die Schalteinrichtung (40) im zweiten Schaltzustand und ansonsten die Schalteinrichtung (40) im ersten Schaltzustand gehalten wird.

14. Verfahren nach Anspruch 13, **dadurch gekennzeichnet, dass** bei einem Anruf von außerhalb des Kraftwagens (10) die Schalteinrichtung (40) vom ersten in den zweiten Schaltzustand durch Erzeugen eines vorbestimmten Schaltsignals umgeschaltet wird.

15. Verfahren nach Anspruch 13 oder 14, **dadurch gekennzeichnet, dass** bei einem Rufaufbau für eine Sprachverbindung durch das zweite Mobilfunkmodul (36) die Schalteinrichtung (40) vom ersten in den zweiten Schaltzustand durch Erzeugen eines vorbestimmten Schaltsignals umgeschaltet wird.

## Claims

1. Mobile communications device for a motor vehicle (10) comprising:
- a first mobile communications module (38) for exchanging a first mobile communications signal in accordance with a first mobile communications standard or several mobile communications standards via a first signal connection (48) of the first mobile communications module (38) with an external mobile communications station (32),
- a second mobile communications module (36) for exchanging a second mobile communications signal in accordance with a second mobile communications standard via a second signal connection (46) of the second mobile communications module (36) with an external mobile communications station (30),
- a first antenna (22) and a second antenna (26) for transmitting the mobile communication signals and
- a switching device (40) which is connected to the antennae (22, 26) and the first and to the second signal connection (46, 48) and is designed to switch over, in dependence on a switching signal, between a first switching state in which the first signal connection (48) is connected to the first antenna (22) and the second signal connection (46) to the second antenna (26), and a second switching state in which the first signal connection (48) is connected to the second antenna (26) and the second signal connection (46) to the first antenna (22),
**characterised by** a switch-over device (54) which is designed, through generating a pre-determined switching signal to switch the switching device (40) into the second switching state at the start of voice transmission.

2. Mobile communications device according to claim 1 **characterised in that** the first mobile communications module (38) is designed to exchange various digital data from voice data by means of the first mobile communications signal, and the second mobile communications module (36) is designed to exchange a voice telephony signal as the second mobile communication signal.

3. Mobile communications device according to any one of the preceding claims **characterised in that** the switch-over device is provided in the second mobile communications module (36) and a control output (54) of the second mobile communications module (36) is connected with a control input (56) of the switching device (40) to send out the control signal.

4. Mobile communications device according to any one of the preceding claims **characterised in that** the second mobile communications module (36) is a GSM module.

5. Mobile communications device according to claim 4 which in the event of a GSM send impulse by the second module is designed to take protective measures for the first mobile communications module.

6. Mobile communications device according to any one of the preceding claims **characterised in that** the first mobile communications module (38) is designed to exchange at least one of the following mobile communication standards: LTE, HSPA, UMTS.

7. Mobile communications device according to any one of the preceding claims **characterised in that** the first mobile communications module (38) has a further signal connection (50), which irrespective of the switching state of the switching device (40) is continuously connected to the second antenna (26).

8. Mobile communications device according to claim 7 **characterised in that** the second antenna (26) is connected by means of a splitter (42) to the switch unit (40) on the one hand and to the further signal connection (50) on the other hand.

9. Mobile communications device according to any one of the preceding claims **characterised in that** the first and the second module communications module (36, 38) are arranged on a common insert card.

10. Mobile communications device according to any one of the preceding claims **characterised by** a switch-over device (54) which is designed to minimise the antenna losses for the second mobile communications module through the use of only a single switch in the case of a telephone conversation.

11. Motor vehicle (10) with a mobile communications device according to any one of the preceding claims.

12. Motor vehicle (10) according to claim 11 **characterised in that** the first antenna (22) has a smaller directivity factor than the second antenna.

13. Method of operating a mobile communications device according to any one of claims 1 to 10 with which during a transmission of a telephony signal the switching device (40) is held in the second switching state and otherwise the switching device (40) is held in the first switching state.

14. Method according to claim 13 **characterised in that** in the case of a call from outside the motor vehicle (10) the switching device (40) is switched from the first into the second switching state through the generation of a predetermined switching signal.

15. Method according to claim 13 or 14 **characterised in that** in the case of a call setup for a voice connection through the second mobile communications module (36) the switching device (40) is switched over from the first into the second switching state through the generation of a pre-determined switching signal.

## Revendications

1. Dispositif de radiocommunication mobile pour un véhicule automobile (10), comprenant :
- un premier module de radiocommunication mobile (38) pour échanger un premier signal de radiocommunication mobile selon un premier standard de radiocommunication mobile ou plusieurs standards de radiocommunication mobile avec une station de radiocommunication mobile externe (32) par l'intermédiaire d'un premier raccordement de signal (48) du premier module de radiocommunication mobile (38),
- un deuxième module de radiocommunication mobile (36) pour échanger un deuxième signal de radiocommunication mobile selon un deuxième standard de radiocommunication mobile avec une station de radiocommunication mobile externe (30) par l'intermédiaire d'un deuxième raccordement de signal (46) du deuxième module de radiocommunication mobile (36),
- une première antenne (22) et une deuxième antenne (26) pour transmettre les signaux de radiocommunication mobile, et
- un commutateur (40) qui est relié aux antennes (22, 26) et au premier et au deuxième raccordement de signal (46, 48) et qui est conçu pour commuter, en fonction d'un signal de commutation, entre un premier état de commutation dans lequel le premier raccordement de signal (48) est couplé à la première antenne (22) et le deuxième raccordement de signal (46) est couplé à la deuxième antenne (26) et un deuxième état de commutation dans lequel le premier raccordement de signal (48) est couplé à la deuxième antenne (26) et le deuxième raccordement de signal (46) est couplé à la première antenne (22),
**caractérisé par**
un dispositif de commutation (54) qui est conçu pour commuter, par la production d'un signal de commutation prédéterminé, le commutateur (40) dans le deuxième état de commutation au début d'une transmission de voix.

2. Dispositif de radiocommunication mobile selon la revendication 1, **caractérisé en ce que** le premier module de radiocommunication mobile (38) est conçu pour échanger au moyen du premier signal de radiocommunication mobile des données d'utilisateur numériques qui sont différentes de données vocales et **en ce que** le deuxième module de radiocommunication mobile (36) est conçu pour échanger comme deuxième signal de radiocommunication mobile un signal de téléphonie vocale.

3. Dispositif de radiocommunication mobile selon l'une des revendications précédentes, **caractérisé en ce que** le dispositif de commutation est mis à disposition dans le deuxième module de radiocommunication mobile (36) et une sortie de commande (54) du deuxième module de radiocommunication mobile (36) est couplée à une entrée de commande (56) du commutateur (40) pour délivrer le signal de commande.

4. Dispositif de radiocommunication mobile selon l'une des revendications précédentes, **caractérisé en ce que** le deuxième module de radiocommunication mobile (36) est un module GSM.

5. Dispositif de radiocommunication mobile selon la revendication 4, qui est conçu pour, dans le cas d'une impulsion d'émission GSM par le deuxième module, prendre des mesures de protection pour le premier module de radiocommunication mobile.

6. Dispositif de radiocommunication mobile selon l'une des revendications précédentes, **caractérisé en ce que** le premier module de radiocommunication mobile (38) est conçu pour échanger le premier signal de radiocommunication mobile selon au moins l'un des standards de radiocommunication mobile suivants : LTE, HSPA, UMTS.

7. Dispositif de radiocommunication mobile selon l'une des revendications précédentes, **caractérisé en ce que** le premier module de radiocommunication mobile (38) comporte un autre raccordement de signal (50) qui est relié en permanence à la deuxième antenne (26) indépendamment de l'état de commutation du commutateur (40).

8. Dispositif de radiocommunication mobile selon la revendication 7, **caractérisé en ce que** la deuxième antenne (26) est reliée par l'intermédiaire d'un séparateur (42) au commutateur (40) d'une part et à l'autre raccordement de signal (50) d'autre part.

9. Dispositif de radiocommunication mobile selon l'une des revendications précédentes, **caractérisé en ce que** le premier et le deuxième module de radiocommunication mobile (36, 38) sont agencés sur une carte à enficher commune.

10. Dispositif de radiocommunication mobile selon l'une des revendications précédentes, **caractérisé par** un dispositif de commutation (54) qui est conçu pour minimiser les pertes d'antenne pour le deuxième module de radiocommunication mobile en utilisant un seul commutateur dans le cas d'une conversation téléphonique.

11. Véhicule automobile (10) avec un dispositif de radiocommunication mobile selon l'une des revendications précédentes.

12. Véhicule automobile (10) selon la revendication 11, **caractérisé en ce que** la première antenne (22) a un plus petit coefficient de directivité que la deuxième antenne.

13. Procédé de fonctionnement d'un dispositif de radiocommunication mobile selon l'une des revendications 1 à 10, selon lequel on garde le commutateur (40) dans le deuxième état de commutation pendant une transmission d'un signal téléphonique et on garde sinon le commutateur (40) dans le premier état de commutation.

14. Procédé selon la revendication 13, **caractérisé en ce que**, pour un appel à partir de l'extérieur du véhicule automobile (10), on commute le commutateur (40) du premier au deuxième état de commutation en produisant un signal de commutation prédéterminé.

15. Procédé selon la revendication 13 ou 14, **caractérisé en ce que**, lors d'un établissement d'appel pour une liaison vocale via le deuxième module de radiocommunication mobile (36), le commutateur (40) est commuté du premier au deuxième état de commutation en produisant un signal de commutation prédéterminé.
